# FASCICULE DE BREVET EUROPEEN

(11) **EP 3 071 798 B1**
(45) Date de publication et mention de la délivrance du brevet: **19.06.2019**
(21) Numéro de dépôt: 14806031.2
(22) Date de dépôt: 07.11.2014
(51) Int. Cl.: F01D 21/02, F02C 3/10, F02C 9/46

(54) **TURBOMACHINE ET PROCEDE DE REGULATION**
TURBINENMOTOR UND STEUERUNGSVERFAHREN
TURBINE ENGINE AND CONTROL METHOD

(30) Priorité: 19.11.2013 FR 1361353
(43) Date de publication de la demande: 28.09.2016
(73) Titulaire: Safran Helicopter Engines, 64510 Bordes (FR)
(72) Inventeur: LANGFORD, Stephen, F-64000 Pau (FR); LESCHER, Fabien, F-64320 Aressy (FR)
(74) Mandataire: Calvo de Nó, Rodrigo
(86) Numéro de dépôt international: PCT/FR2014/052849
(87) Numéro de publication internationale: WO 2015/075346

(56) Documents cités:
- EP-A1- 2 570 617
- WO-A1-2012/001334
- GB-A- 2 214 331
- US-B1- 6 321 525

## Description

### Arrière-plan de l'invention

La présente invention concerne le domaine des turbomachines et leur régulation.

On entend par « turbomachine », dans le présent contexte, toute machine permettant la conversion de l'énergie thermique d'un fluide de travail en énergie mécanique par détente dudit fluide de travail dans une turbine. Plus particulièrement, ce fluide de travail peut être un gaz de combustion résultant de la réaction chimique d'un combustible avec de l'air dans une chambre de combustion, après la compression de cet air dans un compresseur actionné par la turbine à travers un premier arbre rotatif. Ainsi, les turbomachines, telles que comprises dans le présent contexte, comprennent les turboréacteurs à flux simple ou double, les turbopropulseurs, les turbomoteurs ou les turbines à gaz, entre autres. Dans la description qui suit les termes "amont" et "aval" sont définis par rapport au sens de circulation normal du fluide de travail à travers une telle turbomachine,

En particulier, cette description concerne les procédés de régulation de turbomachines comprenant au moins un compresseur, une chambre de combustion en aval du compresseur, une première et une deuxième turbines en aval de la chambre de combustion, un premier arbre rotatif solidaire en rotation au moins dudit compresseur et de ladite première turbine, un deuxième arbre rotatif duquel la deuxième turbine est solidaire en rotation, ce deuxième arbre rotatif étant toutefois libre en rotation par rapport au premier arbre rotatif, et un régulateur pour piloter l'alimentation en carburant de ladite chambre de combustion. Des telles turbomachines sont connues comme « turbines à gaz », notamment dans des applications statiques, « turbopropulseurs » quand le deuxième arbre rotatif sert à actionner une hélice propulsive, ou « turbomoteurs » quand elles sont embarquées à bord d'un véhicule, mais qu'elles servent à actionner un dispositif propulsif autre qu'une hélice propulsive. On utilise ainsi des turbomoteurs notamment pour l'actionnement de voilures tournantes d'aéronef,

Dans ce domaine, et particulièrement pour des turbomoteurs et turbopropulseurs d'aéronefs, et notamment les turbomoteurs destinés à assurer l'actionnement de voilures tournantes, une rupture accidentelle de la transmission de puissance à partir de la deuxième turbine, ou turbine libre, peut provoquer un emballement dangereux de cette deuxième turbine. Afin d'éviter des dommages plus importants suite à cet emballement, il a été proposé que le régulateur coupe l'alimentation de la chambre de combustion en carburant si une vitesse de rotation dudit deuxième arbre rotatif dépasse un seuil maximal.

La fixation de ce seuil maximal exige toutefois d'importants compromis techniques. En effet, dans certaines applications, il peut être souhaitable d'atteindre des survitesses importantes du deuxième arbre à certains régimes de fonctionnement de la turbomachine. Ainsi, dans le domaine des aéronefs à voilure tournante, ceci peut servir à permettre des pointes transitoires de vitesse de rotation de la voilure dans le cadre de manoeuvres sévères de l'aéronef. Toutefois, un seuil maximal élevé de la vitesse de rotation du deuxième arbre rotatif exige aussi un surdimensionnement important de la deuxième turbine et du deuxième arbre rotatif en fonction du couple maximal délivré à travers ce deuxième arbre rotatif en conditions stabilisées, notamment aux régimes de puissance maximale continue (PMC) ou puissance maximale au décollage (PMD). Un tel surdimensionnement ne peut normalement se faire qu'en détriment des performances de la turbomachine, et avec une augmentation sensible de sa masse, augmentation particulièrement indésirable dans le domaine aéronautique.

Une solution proposée dans i'état de la technique face à cet inconvénient, pour des groupes multimoteurs comprenant au moins deux telles turbomachines, est d'y intégrer un dispositif d'inhibition croisée évitant la coupure simultanée de l'alimentation des deux turbomachines suite à un dépassement dudit seuil maximal de vitesse du deuxième arbre rotatif. Toutefois, cette solution présente d'autres inconvénients, et notamment en cas de rupture de la transmission de puissance en aval des deux turbomachines lors d'un accident.

### Objet et résumé de l'invention

La présente invention vise à remédier à ces inconvénients. En particulier, la présente description vise à proposer un procédé de régulation d'une turbomachine qui permette d'éviter un emballement dangereux de sa turbine libre en cas de rupture de la transmission de puissance en aval, sans toutefois poser obstacle aux pointes de vitesse volontaires, ni exiger un surdimensionnement excessif de la turbine libre ou de la transmission de puissance à partir de celle-ci.

Dans au moins un mode de réalisation, ce but est atteint grâce au fait que seuil maximal de la vitesse de rotation du deuxième arbre rotatif varie en fonction d'au moins un paramètre physique indicatif associé à une puissance mécanique extraite à des gaz de combustion par la deuxième turbine, ledit seuil maximal de la vitesse de rotation du deuxième arbre rotatif étant réduit quand ledit paramètre physique indicatif dépasse un seuil supérieur et quand ledit paramètre physique indicatif passe sous un seuil inférieur.

Grâce à ces dispositions, ce seuil maximal de la vitesse de rotation du deuxième arbre rotatif peut être différent pour une survitesse résultant d'une rupture de la transmission de puissance en aval de la turbine libre et pour une excursion volontaire et transitoire de la vitesse de cette turbine libre.

Plusieurs paramètres physiques différents sont associés à la puissance mécanique extraite à des gaz de combustion par la deuxième turbine. Ainsi, par exemple, le couple transmis par le deuxième arbre rotatif est, avec sa vitesse de rotation, directement en relation avec cette puissance. Le paramètre physique indicatif utilisé dans ce procédé peut donc être, par exemple, le couple transmis par le deuxième arbre rotatif.

Toutefois, d'autres paramètres physiques de la turbomachine sont également associés à la puissance mécanique transmise par les gaz de combustion à la deuxième turbine. En particulier, le régime du générateur de gaz est aussi intimement en relation avec cette puissance. Ainsi, le paramètre physique indicatif utilisé dans ce procédé peut aussi être, par exemple, une vitesse de rotation du premier arbre rotatif. Dans ce cas en particulier, ledit seuil maximal de la vitesse de rotation du deuxième arbre rotatif peut notamment varier en fonction non seulement d'au moins ladite vitesse de rotation du premier arbre rotatif, mais aussi d'une pression et/ou température ambiante. En particulier, cette pression et/ou température ambiante peut servir à normaliser ladite vitesse de rotation du premier arbre rotatif dans une fonction déterminant ledit seuil maximal de la vitesse de rotation du deuxième arbre rotatif.

D'autres paramètres physiques associés à la puissance extraite à des gaz de combustion par la deuxième turbine et pouvant être utilisés comme paramètres physiques indicatifs dans ce procédé, alternativement ou en complément au couple transmis par le deuxième arbre rotatif et/ou à la vitesse de rotation du premier arbre rotatif, sont par exemple, une pression en aval dudit compresseur, une température en aval de ladite chambre de combustion, un débit (massique ou volumique) de carburant fourni à la chambre de combustion, un débit (massique ou volumique) d'air traversant le compresseur et/ou un déplacement d'un organe de commande de la turbomachine.

Ledit seuil maximal de la vitesse de rotation du deuxième arbre rotatif est donc réduit quand ledit paramètre physique indicatif dépasse un seuil supérieur. Une telle diminution du seuil maximal de la vitesse de rotation du deuxième arbre rotatif au-delà d'un seuil supérieur du paramètre physique indicatif associé à la puissance mécanique extraite à des gaz de combustion par la deuxième turbine permet de couper l'alimentation en carburant au plus tôt suite à une rupture de la transmission de puissance en aval de la turbine libre, ou d'une défaillance au niveau de la régulation de l'alimentation en carburant provoquant une montée en régime incontrôlée de la turbomachine. En même temps, le seuil maximal de la vitesse de rotation du deuxième arbre plus élevé en-dessous de ce seuil supérieur du paramètre physique indicatif permet d'accommoder les survitesses transitoires de la turbine libre à bas régime du générateur de gaz. Néanmoins, en dessous dudit seuil supérieur du paramètre physique indicatif, un avertissement pourrait être enregistré si la vitesse de rotation du deuxième arbre rotatif dépasse un seuil d'avertissement sensiblement inférieur à son seuil maximal, afin par exemple de déclencher une inspection de la turbomachine suite à une telle survitesse transitoire,

En outre, ledit seuil maximal de la vitesse de rotation du deuxième arbre rotatif peut diminuer graduellement avec une augmentation dudit paramètre physique indicatif entre un seuil intermédiaire de ladite vitesse de rotation du premier arbre rotatif et son seuil supérieur, adaptant ainsi le seuil maximal de la vitesse de rotation du deuxième arbre rotatif à la croissance de la puissance extraite aux gaz de combustion par la deuxième turbine et normalement transmise par ce deuxième arbre rotatif. Ceci permet une optimisation du dimensionnement de la deuxième turbine et du deuxième arbre rotatif.

D'autre part, en-dessous d'un seuil inférieur du paramètre physique indicatif, une survitesse du deuxième arbre rotatif peut être indicative d'une défaillance importante. En particulier, si le couple transmis par le deuxième arbre rotatif est en dessous d'un certain seuil, une survitesse du deuxième arbre rotatif est vraisemblablement causée par une rupture de la transmission de puissance en aval du deuxième arbre rotatif. Mais même si le paramètre physique indicatif adopté est un autre, une survitesse du deuxième arbre rotatif en dessous d'un seuil inférieur de ce paramètre physique indicatif peut signifier une défaillance au niveau du ou des capteurs servant justement à mesurer ce paramètre physique indicatif. Si le paramètre physique indicatif associé à la puissance extraite aux gaz de combustion par la deuxième turbine est en dessous de ce seuil inférieur, alors que le deuxième arbre rotatif est en survitesse, cela pourrait signifier, notamment, que les valeurs mesurées pour ces paramètres physiques indicatifs ne sont: en fait pas leurs valeurs réelles. La réduction dudit seuil maximal de la vitesse du deuxième arbre rotatif quand ledit paramètre physique indicatif passe sous son seuil inférieur permet d'éviter de maintenir un seuil maximal élevé pour la vitesse de rotation du deuxième arbre rotatif, alors que la puissance extraite aux gaz de combustion par la deuxième turbine est en réalité incertaine.

L'invention concerne également un support informatique comprenant un ensemble d'instructions aptes à être exécutées par un régulateur numérique programmable pour mettre en oeuvre un tel procédé de régulation, Dans le présent contexte, on entend par « support informatique » tout dispositif de stockage de données pouvant être lu par un système informatique, et notamment par un processeur d'un tel régulateur électronique programmable. Un tel support informatique peut notamment être un dispositif de stockage magnétique de données, tel qu'un disque ou bande magnétique, un dispositif de stockage optique de données, tel qu'un disque optique, ou un dispositif de stockage électronique de données, tel qu'une mémoire électronique volatile ou non-volatile, La présente description concerne donc aussi cet ensemble d'instructions en tant que programme informatique et produit logiciel.

En outre, l'invention concerne aussi une turbomachine comprenant au moins un compresseur, une chambre de combustion en aval du compresseur, une première et une deuxième turbines en aval de la chambre de combustion, un premier arbre rotatif solidaire en rotation au moins dudit compresseur et de ladite première turbine, un deuxième arbre rotatif duquel la deuxième turbine est solidaire en rotation, ce deuxième arbre rotatif étant toutefois libre en rotation par rapport au premier arbre rotait un circuit d'alimentation de la chambre de combustion en carburant, et un régulateur pour piloter l'alimentation de la chambre de combustion en carburant, configuré pour couper ladite alimentation si une vitesse de rotation dudit deuxième arbre rotatif dépasse un seuil maximal. Dans au moins un mode de réalisation de ce procédé, ledit seuil maximal de la vitesse de rotation du deuxième arbre rotatif varie en fonction d'au moins un paramètre physique indicatif associé à une puissance mécanique extraite à des gaz de combustion à la deuxième turbine.

L'invention concerne également un groupe moteur comprenant au moins deux telles turbomachines, ainsi qu'un aéronef, et en particulier un aéronef à voilure tournante, comprenant au moins une telle turbomachine et possiblement au moins deux.

### Brève description des dessins

L'invention sera bien comprise et ses avantages apparaîtront mieux, à la lecture de la description détaillée qui suit, de plusieurs modes de réalisation représentés à titre d'exemples non limitatifs, La description se réfère aux dessins annexés sur lesquels :
- la figure 1 est une vue en perspective schématique d'un aéronef à voilure tournante ;
- la figure 2 est une vue schématique d'un groupe moteur de l'aéronef de la figure 1, avec deux turbomoteurs ; et
- la figure 3 est un graphique indiquant l'évolution d'un seuil maximal de la vitesse de rotation d'un arbre rotatif solidaire de la turbine libre d'un des turbomoteurs de la figure 2, en fonction du couple transmis par cet arbre rotatif de la turbine fibre ou de la vitesse de rotation d'un arbre rotatif du générateur de gaz du même turbomoteur.

### Description détaillée de l'invention

La première figure illustre un aéronef 1 à voilure tournante, plus spécifiquement un hélicoptère avec un rotor principal 2 et un rotor de queue anti-coupie 3 couplés à un groupe moteur 4 pour leur actionnement. Le groupe moteur 4 illustré comprend deux turbomachines 5. Plus spécifiquement, ces turbomachines 5 sont des turbomoteurs avec chacun un arbre de prise de puissance 6 relié à une boîte de transmission principale 7 pour actionner le rotor principal 2 et le rotor de queue 3.

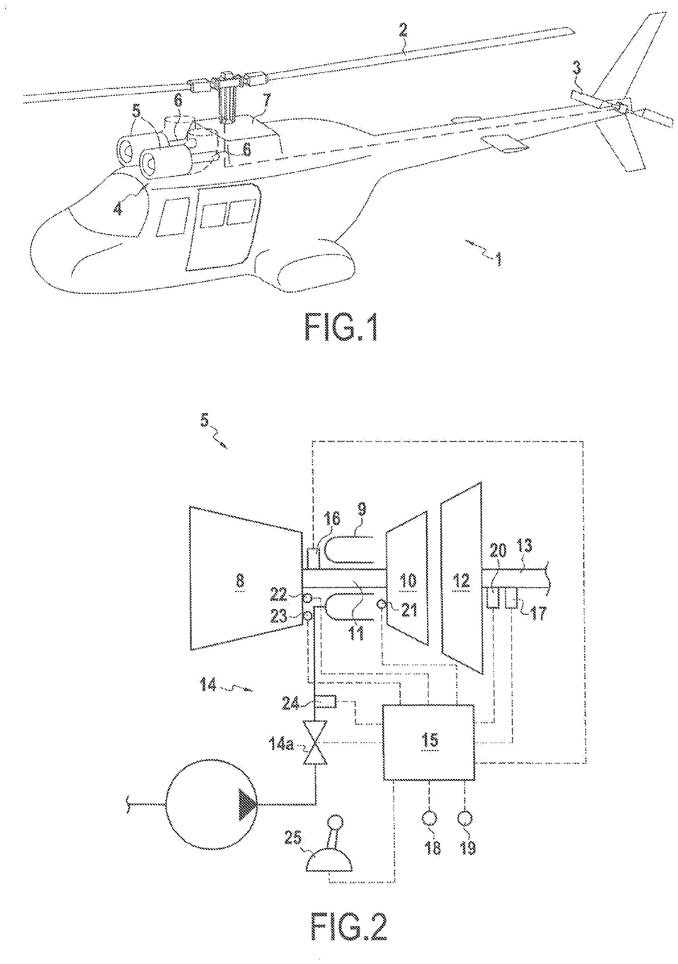

Une turbomachine 5 du groupe moteur 4 est illustrée en plus grand détail sur la figure 2. Chaque turbomachine 5 comprend un compresseur 8, une chambre de combustion 9, une première turbine 10 reliée par un premier arbre rotatif 11 au compresseur 8 et une deuxième turbine 12, ou turbine libre, couplée à un deuxième arbre rotatif 13 couplé à l'arbre de prise de puissance 6. L'ensemble formé par le compresseur 8, la chambre de combustion 9, la première turbine 10 et le premier arbre rotatif 11 est aussi connu sous le nom de « générateur de gaz », Un circuit d'alimentation 14 assure l'alimentation en carburant de la chambre de combustion 9 dans chaque générateur de gaz GG. Ce circuit d'alimentation 14 comprend au moins une vanne 14a connectée pour son pilotage à un numérique 15, normalement connu sous l'acronyme anglais « FADEC » (« Full Authority Digital Engine Control », c'est-à-dire Régulateur Numérique Moteur à Autorité Pleine). Ce régulateur 15 peut notamment comprendre un processeur électronique programmable, avec une mémoire électronique comprenant un ensemble d'instructions concernant la régulation du fonctionnement de la turbomachine 5. Le régulateur 15 est connecté aussi à un ensemble de capteurs, comprenant notamment un capteur 16 de vitesse de rotation du premier arbre rotatif 11, un capteur 17 de vitesse de rotation du deuxième arbre rotatif 13, des capteurs 18,19 de, respectivement, température et pression ambiantes, un capteur 20 de torsion sur le deuxième arbre rotatif 13, un capteur 21 de température entre la chambre de combustion 9 et la première turbine 10, des capteurs 22,23 de, respectivement, pression et débit d'air entre le compresseur 8 et la chambre de combustion 9, et un capteur 24 de débit de carburant fourni à la chambre de combustion 9, Finalement, le régulateur 15 peut aussi être connecté à un levier de commande 25 actionnaire par un pilote de r'aéronef 1 pour piloter le régime de fonctionnement de chaque turbomachine 5.

Le capteur 20 peut être, par exemple, un couplemètre à torsion tel que ceux divulgués dans les publications de demandes de brevet français FR 2 972 256 et FR 2 931 552, mesurant le couple M₂ transmis par ce deuxième arbre rotatif à travers sa déformation en torsion. Les capteurs de température 18, 21 peuvent notamment être des thermocouples, quoique le capteur 21 pourrait aussi être par exemple un pyromètre. Le capteur 24 peut être une turbine débitmétrique, ou un capteur de position de doseur dans le circuit d'alimentation en carburant.

Typiquement, les composants de chaque turbomachine 5 sont dimensionnés pour un domaine de fonctionnement de la turbomachine 5 clairement défini. Afin d'optimiser les performances du groupe moteur 4 et de l'aéronef 1, il convient en fait d'éviter tout surdimensionnement des composants des turbomachines 5, et notamment des parties tournantes des turbomachines 5. Toutefois, la sécurité ne peut pas être compromise. Ainsi, pour éviter d'atteindre des survitesses pouvant provoquer une rupture de ces parties tournantes, et notamment de la deuxième turbine 12, dont les débris pourraient endommager d'autres composants de l'aéronef 1, le 14 est configuré de manière à couper l'alimentation de la chambre de combustion 9 en carburant en cas de dépassement d'un seuil maximal N_{2,max} par la vitesse de rotation N₂ du deuxième arbre rotatif 13 mesurée par le capteur 17. Cette configuration peut être effectuée à travers les instructions stockées dans la mémoire électronique du régulateur 15.

Dans chaque turbomachine 5, la deuxième turbine 12 et le deuxième arbre rotatif 13 peuvent entrer en survitesse pour plusieurs raisons différentes. Par exemple, en cas de rupture de la transmission de puissance en aval de la deuxième turbine 12, que ce soit au niveau de son deuxième arbre rotatif 13, de l'arbre de prise de puissance 6 ou de la boîte de transmission principale 7, pendant le fonctionnement de la turbomachine 5 à haut régime, la deuxième turbine 12, n'étant plus freinée par un couple de résistance sensible, peut s'emballer et atteindre rapidement une survitesse dangereuse. Une survitesse dangereuse de la deuxième turbine 12 avec le deuxième arbre rotatif 13 peut aussi être provoquée par une montée en régime incontrôlée causée par une défaillance du 15. Dans les deux cas, la survitesse du deuxième arbre rotatif 13 se produit à un régime élevé du générateur de gaz.

D'autre part, des manoeuvres sévères peuvent provoquer des survitesses transitoires de la deuxième turbine 12 et du deuxième arbre rotatif 13. Par exemple, si le pas collectif du rotor principal 2 est brusquement modifiée pour une mise en autorotation, mais qu'un accrochage ou collage de roue libre au sein de la boîte de transmission principale 7 maintient transitoirement la transmission de puissance entre la deuxième turbine 12 et le rotor principal 2, le deuxième arbre rotatif 13 et la deuxième turbine 12 peuvent être entraînés en survitesse par le rotor principal 2, Ces survitesses transitoires peuvent donc se produire à des régimes du générateur de gaz sensiblement moins élevés.

Afin de permettre de telles survitesses transitoires du deuxième arbre rotatif 13 dues à des manoeuvres sévères de l'aéronef 1, tout en réagissant rapidement à une survitesse du deuxième arbre rotatif 13 qui serait causée par la rupture de la transmission de puissance en aval de la deuxième turbine 12 ou par un disfonctionnement du régulateur 15, dans un premier mode de réalisation, le seuil maximal N_{2,max} appliqué à la vitesse de rotation N₂ du deuxième arbre rotatif 13 mesurée par le capteur 17 varie en fonction du couple de torsion M₂ mesuré par le capteur 20 sur le deuxième arbre rotatif 13.

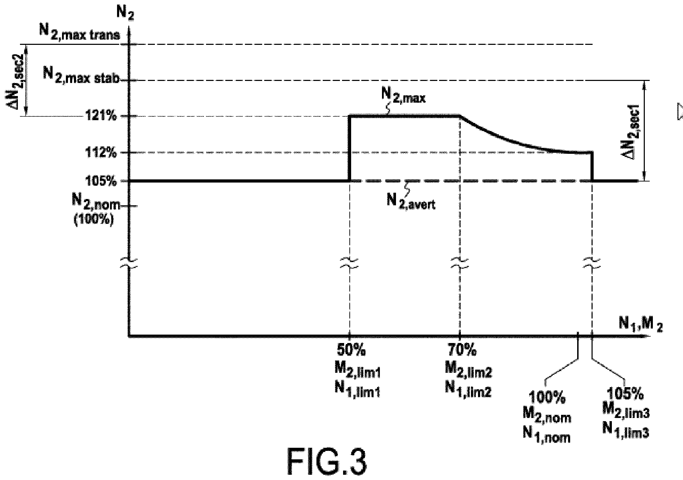

Ainsi, comme Illustré sur la figure 3, quand le couple de torsion M₂ est supérieure à un seuil supérieur M_{2,lim3}, le seuil maximal N_{2,max} appliqué à la vitesse N₂ correspond à une vitesse maximale stabilisée N_{2,maxstab} atteignable par la deuxième turbine 12 avec ce couple maximal M_{2,lim3}, moins une première marge de sécurité ΔN_{2,sec1}, tandis que, quand le couple M₂ est inférieur à un seuil intermédiaire M_{2,lim2}, mais encore supérieur à un seuil inférieur M_{2,lim1}, ledit seuil maximal N_{2,max} appliqué à la vitesse N₂ présente une valeur sensiblement plus élevée correspondant à une vitesse maximale transitoire N_{2,maxtrans} atteignable par la deuxième turbine 12 avec le couple M_{2,lim2}, moins une deuxième marge de sécurité ΔN_{2,sec2}.

Entre le seuil intermédiaire M_{2,lim2} et le seuil supérieur M_{2,lim3} du couple M₂ transmis par le deuxième arbre rotatif 13, le 15 applique à la vitesse N₂ un seuil maximal N_{2,max} décroissant progressivement avec la croissance du couple M₂.

D'autre part, si la deuxième turbine 12 entre en survitesse alors que le couple M₂ transmis par le deuxième arbre rotatif 3 est inférieur à un seuil inférieur M_{2,lim1}, ceci indiquerait bien une rupture de la transmission de puissance en aval de la deuxième turbine 12, bien une défaillance du capteur 20. En conséquence, le seuil maximal N_{2,max} de la vitesse N₂ du deuxième arbre rotatif 13 est réduit, En particulier, comme illustré sur la figure 3, ce seuil maximal N_{2,max} de la vitesse N₂ du deuxième arbre rotatif 13 peut être sensiblement identique pour un couple M₂ inférieur à son seuil inférieur M_{2,lim1} et pour un couple M₂ supérieur à son seuil supérieur M_{2,lim3}.

En outre, le 15 peut être configuré de manière à enregistrer un avertissement quand la vitesse de rotation du deuxième arbre rotatif 13 dépasse un seuil d'avertissement N_{2,avert} inférieur au seuil maximal N_{2,max} au moins quand le couple mesuré M₂ du deuxième arbre rotatif 13 est située dans la plage entre son seuil inférieur M_{2,lim1} et son seuil supérieur M_{2,lim3}. Ainsi, même si le régulateur 15 permet une survitesse transitoire importante à ce régime, il enregistre néanmoins un avertissement concernant cet évènement, pour éventuellement provoquer une inspection du groupe moteur 4, Cet enregistrement peut être accompagné d'un signal d'avertissement visible ou audible dirigé au pilote.

Sur la figure 3, le couple M₂ et la vitesse de rotation N₂ du deuxième arbre rotatif 13 sont exprimés en tant que pourcentages de, respectivement, son couple et sa vitesse de rotation M_{2,nom} et N_{2,nom} du à plein régime nominal. Ainsi, dans le mode de réalisation illustré, quand le couple mesuré M₂ du deuxième arbre rotatif 13 est en dessous d'un seuil inférieur M_{2,lim1} de, par exemple, 50% de son couple M_{2,nom} à plein régime nominal, ou au-dessus d'un seuil supérieur M_{2,lim3} de, par exemple, 105% du couple M_{2,nom} à plein régime nominal N₁, le seuil maximal N_{2,max} de sa vitesse de rotation N₂ est à, par exemple, uniquement 105% de sa vitesse à plein régime nominal N_{2,nom}. D'autre part, quand le couple M₂ est entre le seuil inférieur M_{2,lim1} et un seuil intermédiaire M_{2,lim2} de, par exemple, 70% du couple M_{2,nom} à plein régime nominal, le seuil maximal N_{2,max} de la vitesse de rotation N₂ du deuxième arbre rotatif 13 est sensiblement plus élevé, Ce seuil maximal N_{2,max} de la vitesse de rotation N₂ du deuxième arbre rotatif 13 peut alors être, par exemple, à 121 % de sa vitesse à plein régime nominal N_{2,nom,} afin de permettre des survitesses transitoires. Au-delà du seuil intermédiaire M_{2,lim2} du couple M₂, le seuil maximal N_{2,max} de la vitesse de rotation N₂ peut descendre graduellement jusqu'à, par exemple, 112% de sa vitesse à plein régime nominal N_{2,nom} au seuil supérieur M_{2,lim3}. En outre, entre le seuil inférieur M_{2,lim1} et le seuil supérieur M_{2,lim3} du couple M₂, le régulateur 15 est configuré pour enregistrer un avertissement quand la vitesse de rotation N₂ du deuxième arbre rotatif 13 dépasse un seuil d'avertissement N_{2,avert} inférieur au seuil maximal N_{2,max} pour cet intervalle de valeurs du couple M₂. Par exemple, dans l'exemple illustré, le seuil d'avertissement N_{2,avert} est à 105% de la vitesse N_{2,nom} du deuxième arbre rotatif 13 à plein régime nominal N_{2,nom}, c'est-à-dire au même niveau que le seuil maximal N_{2,max} de la vitesse de rotation N₂ du deuxième arbre rotatif 13 quand la vitesse mesurée N₁ du premier arbre rotatif 11 est en dessous de son seuil inférieur N_{1,lim1} ou au-dessus d'un seuil supérieur N_{1,lim3}. Chacune de ces valeurs numériques n'est donnée qu'à titre illustratif, et d'autres valeurs plus appropriées pourraient être choisies pour chaque seuil en fonction, par exemple, des paramètres du groupe moteur 4 et de l'aéronef 1.

Toutefois, dans d'autres modes de réalisation, d'autres paramètres physiques indicatifs associés à la puissance mécanique extraite aux gaz de combustion par la deuxième turbine 12 peuvent être utilisés alternativement ou en complément à ce couple M₂.

Ainsi, dans un deuxième mode de réalisation, le seuil maximal N_{2,lim} appliqué à la vitesse de rotation N₂ du deuxième arbre rotatif 13 mesurée par le capteur 17 varie en fonction de la vitesse de rotation N₁ du premier arbre rotatif 11 mesurée par le capteur 16, et donc en fonction du régime du générateur de gaz. Comme illustré sur la figure 3, l'évolution de ce seuil maximal N_{2,lim} en fonction de la vitesse de rotation N₁ du premier arbre rotatif 11 mesurée par le capteur 16 peut être analogue à celle en fonction du couple M₂ dans le premier mode de réalisation.

Ainsi, sur la figure 3, la vitesse de rotation N₁ est aussi exprimée en tant que pourcentage de la vitesse de rotation à plein régime nominal N_{1,nom} du premier arbre rotatif 11, sur le même axe que le couple M₂. Quand la vitesse mesurée N₁ du premier arbre rotatif 11 est en dessous d'un seuil inférieur N_{1,lim1} de, par exemple, 50% de sa vitesse à plein régime nominal N_{1,nom}, ou au-dessus d'un seuil supérieur N_{1,lim3} de, par exemple, 105% de sa vitesse à plein régime nominal N_{1,nom}, le seuil maximal N_{2,max} de la vitesse de rotation N₂ du deuxième arbre rotatif 13 est à, par exemple, uniquement 105% de sa vitesse à plein régime nominal N_{2,nom}, D'autre part, quand la vitesse N₁ du premier arbre rotatif 11 est entre le seuil inférieur N_{1,lim1} et un seuil intermédiaire N_{1,lim2} de, par exemple, 50% de sa vitesse à plein régime nominal N_{1,nom}, le seuil maximal N_{2,max} de la vitesse de rotation N₂ du deuxième arbre rotatif 13 est sensiblement plus élevé. Ce seuil maximal N_{2,max} de la vitesse de rotation N₂ du deuxième arbre rotatif 13 peut alors être, par exemple, à 121 % de sa vitesse à plein régime nominal N_{2,nom}, afin de permettre des survitesses transitoires. Au-delà du seuil intermédiaire N_{1,lim2} de la vitesse N₁ du premier arbre rotatif 11, le seuil maximal N_{2,max} de la vitesse de rotation N₂ du deuxième arbre rotatif 13 peut descendre graduellement jusqu'à, par exemple, 112% de sa vitesse à plein régime nominal N_{2,nom} au seuil supérieur N_{1,lim3}, afin de prendre en compte le couple croissant transmis par le deuxième arbre rotatif 13, En outre, entre le seuil inférieur N_{1,lim1} et le seuil supérieur N_{1,lim3} de la vitesse de rotation N₁ du premier arbre rotatif 11, le régulateur 15 est configuré pour enregistrer un avertissement quand la vitesse de rotation N₂ du deuxième arbre rotatif 13 dépasse un seuil d'avertissement N_{2,avert} inférieur au seuil maximal N_{2,max} dans cet intervalle de vitesses N₁ du premier arbre rotatif 1.1, Par exemple, dans l'exemple lustré, le seuil d'avertissement N_{2,avert} est à 105% de la vitesse N_{2,nom} du deuxième arbre rotatif 13 à plein régime nominal N_{2,nom}, c'est-à-dire au même niveau que le seuil maximal N_{2,max} de la vitesse de rotation N₂ du deuxième arbre rotatif 13 quand la vitesse mesurée N₁ du premier arbre rotatif 11 est en dessous de son seuil inférieur N_{1,lim1} ou au-dessus d'un seuil supérieur N_{1,lim3}. Chacune de ces valeurs numériques n'est donnée qu'à titre illustratif, et d'autres valeurs plus appropriées pourraient être choisies pour chaque seuil en fonction, par exemple, des paramètres du groupe moteur 4 et de l'aéronef 1.

La courbe illustrée sur la figure 3 reproduit donc aussi l'évolution du seuil maximal N_{2,max} de la vitesse de rotation N₂ du deuxième arbre rotatif 13 en fonction de la vitesse mesurée N₁ du premier arbre rotatif 11 à une pression et température ambiantes p₀, T₀ fixes. Toutefois, ce seuil maximal N_{2,max} peut aussi varier en fonction de la pression et de la température ambiantes p₀, T₀ captées par les capteurs 18, 19. Par exemple, le seuil maximal N_{2,max} de la vitesse de rotation N₂ du deuxième arbre rotatif 13 pourrait être exprimé en fonction d'un régime normalisé NG du générateur de gaz, formulé comme le produit de la vitesse de rotation N₁ et de la pression ambiante p₀, divisé par la racine carrée de la température ambiante T₀.

D'autres paramètres physiques indicatifs peuvent également être utilisés alternativement ou en complément au couple M₂ ou la vitesse de rotation N₁. Ainsi, dans d'autres modes de réalisation, le seuil maximal N_{2,max} peut varier en fonction, par exemple, une pression p₃ ou un débit d'air Qₐ mesurés à travers les capteurs 22,23 dans la veine d'air de la turbomachine 5 en aval du compresseur 8, une température T₄₅ des gaz de combustion mesurée à travers le capteur 21 entre la chambre de combustion 9 et la première turbine 10, un débit de carburant Q_{c} mesuré à travers le capteur 24 dans le circuit d'alimentation en carburant, et/ou la position du levier de commande 25 par rapport au point mort. L'évolution du seuil maximal N_{2,max} de la vitesse de rotation N₂ du deuxième arbre rotatif 13 en fonction de chacun de ces paramètres physiques indicatifs peut être analogue à celle illustrée sur la figure 3 en fonction du couple M₂ ou la vitesse N₁.

Dans chacun des modes de réalisation évoqués, l'évolution du seuil maximal N_{2,max} en fonction d'au moins un paramètre physique indicatif peut être enregistrée en tant que cartographie dans le régulateur 15. Cette cartographie peut notamment être enregistrée sur un support informatique au sein de ce régulateur 15, et utilisée par un programme informatique comportant une série d'instructions pour mettre en oeuvre ce procédé de régulation de la turbomachine 5, et pouvant également être enregistré sur un support informatique apte à être lu par un processeur du régulateur 15 pour cette mise en oeuvre. Toutefois, le régulateur 15 peut prendre d'autres formes que celles d'un régulateur numérique programmable. Il pourrait aussi être, par exemple, un régulateur mécanique, fluidique ou électronique à logique câblée,

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt: que restrictif.

## Revendications

1. Procédé de régulation d'au moins une turbomachine (5) comprenant au moins :
un compresseur (8),
une chambre de combustion (9) en aval du compresseur,
une première et une deuxième turbines (10,12) en aval de la chambre de combustion"
un premier arbre rotatif (11) solidaire en rotation au moins dudit compresseur et de ladite première turbine,
un deuxième arbre rotatif (13) duquel la deuxième turbine est solidaire en rotation, ce deuxième arbre rotatif étant toutefois libre en rotation par rapport au premier arbre rotatif, et
un régulateur (15) pour piloter l'alimentation de la chambre de combustion en carburant,
dans lequel ledit régulateur coupe l'alimentation de la chambre de combustion en carburant si une vitesse de rotation (N₂) dudit deuxième arbre rotatif dépasse un seuil maximal (N_{2,max}) qui varie en fonction d'au moins un paramètre physique indicatif associé à une puissance mécanique extraite à des gaz de combustion par la deuxième turbine (12), **caractérisé en ce que** ledit seuil maximal de la vitesse de rotation du deuxième arbre rotatif est réduit quand ledit paramètre physique indicatif dépasse un seuil supérieur et quand ledit paramètre physique indicatif passe sous un seuil inférieur.

2. Procédé de régulation suivant la revendication 1, dans lequel ledit paramètre physique indicatif est un couple transmis par le deuxième arbre rotatif.

3. Procédé de régulation suivant la revendication 1, dans lequel ledit paramètre physique indicatif est une vitesse de rotation du premier arbre rotatif,

4. Procédé de régulation suivant la revendication 3, dans lequel ledit seuil maximal de la vitesse de rotation du deuxième arbre rotatif varie en fonction d'au moins ladite vitesse de rotation du premier arbre rotatif ainsi que d'une pression et/ou température ambiante (p₀/T₀).

5. Procédé de régulation suivant la revendication 1, dans lequel ledit paramètre physique indicatif est une pression en aval dudit compresseur (8),

6. Procédé de régulation suivant la revendication 1, dans lequel ledit paramètre physique indicatif est une température en aval de ladite chambre de combustion (9).

7. Procédé de régulation suivant la revendication 1, dans lequel ledit paramètre physique indicatif est un débit de carburant fourni à la chambre de combustion (9).

8. Procédé de régulation suivant la revendication 1, dans lequel ledit paramètre physique indicatif est un débit d'air traversant ledit compresseur (8).

9. Procédé de régulation suivant la revendication 1, dans lequel ledit paramètre physique indicatif est un déplacement d'un organe de commande (25) de la turbomachine (5).

10. Procédé de régulation suivant l'une quelconque des revendications précédentes, dans lequel, en dessous dudit seuil supérieur dudit paramètre physique indicatif, un avertissement est enregistré si la vitesse de rotation (N₂) du deuxième arbre rotatif dépasse un seuil d'avertissement (N_{2,avert}) sensiblement inférieur à son seuil maximal

11. Procédé de régulation suivant l'une quelconque des revendications précédentes, dans laquelle ledit seuil maximal de la vitesse de rotation du deuxième arbre rotatif diminue graduellement avec une augmentation dudit paramètre physique indicatif entre un seuil intermédiaire et son seuil supérieur.

12. Support informatique comprenant un ensemble d'instructions aptes à être exécutées par un régulateur numérique programmable pour mettre en oeuvre un procédé de régulation suivant l'une quelconque des revendications 1 à 11.

13. Turbomachine (5) comprenant au moins :
un compresseur (8),
une chambre de combustion (9) en aval du compresseur,
une première et une deuxième turbines (10,12) en aval de la chambre de combustion,
un premier arbre rotatif (11) solidaire en rotation au moins dudit compresseur et de ladite première turbine,
un deuxième arbre rotatif (13) duquel la deuxième turbine est solidaire en rotation, ce deuxième arbre rotatif étant toutefois libre en rotation par rapport: au premier arbre rotatif,
un régulateur (15) pour piloter l'alimentation de la chambre de combustion en carburant, configuré pour couper ladite alimentation si une vitesse de rotation (N₂) dudit deuxième arbre rotatif dépasse un seul! maximal (N_{2,max}) qui varie en fonction d'au moins un paramètre physique indicatif associé à une puissance mécanique extraite à des gaz de combustion par la deuxième turbine (12) ;
**caractérisée en ce que** ledit seuil maximal de la vitesse de rotation du deuxième arbre rotatif est réduit quand ledit paramètre physique indicatif dépasse un seuil supérieur et quand ledit paramètre physique indicatif passe sous un seuil inférieur.

## Patentansprüche

1. Verfahren zum Regeln wenigstens einer Turbomaschine (5), umfassend wenigstens:
einen Verdichter (8),
eine Brennkammer (9) stromabwärts des Verdichters,
eine erste und eine zweite Turbine (10, 12) stromabwärts der Brennkammer,
eine erste Drehwelle (11), die wenigstens mit dem Verdichter und der ersten Turbine drehfest verbunden ist,
eine zweite Drehwelle (13), mit der die zweite Turbine drehfest verbunden ist, wobei diese zweite Drehwelle jedoch bezüglich der ersten umlaufenden Welle drehfrei ist, und
einen Regler (15) zum Steuern der Versorgung der Brennkammer mit Treibstoff,
wobei der Regler die Versorgung der Brennkammer mit Treibstoff unterbricht, wenn eine Drehzahl (N₂) der zweiten Drehwelle einen maximalen Schwellwert (N_{2,max}) überschreitet, der in Abhängigkeit von wenigstens einem physikalischen Richtparameter variiert, der einer mechanischen Leistung, welche durch die zweite Turbine (12) aus Verbrennungsgasen entnommen wird, zugeordnet ist,
**dadurch gekennzeichnet, dass** der maximale Schwellwert der Drehzahl der zweiten Drehwelle vermindert wird, wenn der physikalische Richtparameter einen oberen Schwellwert überschreitet und wenn der physikalische Richtparameter einen unteren Schwellwert unterschreitet.

2. Regelungsverfahren nach Anspruch 1, bei dem der physikalische Richtparameter ein durch die zweite Drehwelle übertragenes Drehmoment ist.

3. Regelungsverfahren nach Anspruch 1, bei dem der physikalische Richtparameter eine Drehzahl der ersten Drehwelle ist.

4. Regelungsverfahren nach Anspruch 3, bei dem der maximale Schwellwert der Drehzahl der zweiten Drehwelle in Abhängigkeit wenigstens der Drehzahl der ersten Drehwelle sowie eines Umgebungsdrucks und/oder einer Umgebungstemperatur (p₀,T₀) variiert.

5. Regelungsverfahren nach Anspruch 1, bei dem der physikalische Richtparameter ein Druck stromabwärts des Verdichters (8) ist.

6. Regelungsverfahren nach Anspruch 1, bei dem der physikalische Richtparameter eine Temperatur stromabwärts der Brennkammer (9) ist.

7. Regelungsverfahren nach Anspruch 1, bei dem der physikalische Richtparameter eine der Brennkammer (9) bereitgestellte Treibstoffmenge ist.

8. Regelungsverfahren nach Anspruch 1, bei dem der physikalische Richtparameter eine den Verdichter (8) durchströmende Luftmenge ist.

9. Regelungsverfahren nach Anspruch 1, bei dem der physikalische Richtparameter eine Bewegung eines Steuerorgans (25) der Turbomaschine (5) ist.

10. Regelungsverfahren nach einem der vorhergehenden Ansprüche, bei dem unterhalb des oberen Schwellwertes des physikalischen Richtparameters eine Warnung aufgezeichnet wird, wenn die Drehzahl (N₂) der zweiten Drehwelle einen Warnschwellwert (N_{2,avert}) überschreitet, der deutlich unter ihrem maximalen Schwellwert liegt.

11. Regelungsverfahren nach einem der vorhergehenden Ansprüche, bei dem der maximale Schwellwert der Drehzahl der zweiten Drehwelle mit einer Zunahme des physikalischen Richtparameters zwischen einem Zwischenschwellwert und ihrem oberen Schwellwert allmählich abnimmt.

12. Datenträger, umfassend einen Satz von Befehlen, die geeignet sind, durch einen programmierbaren digitalen Regler ausgeführt zu werden, um ein Regelungsverfahren nach einem der Ansprüche 1 bis 11 durchzuführen.

13. Turbomaschine (5), umfassend wenigstens:
einen Verdichter (8),
eine Brennkammer (9) stromabwärts des Verdichters,
eine erste und eine zweite Turbine (10, 12) stromabwärts der Brennkammer,
eine erste Drehwelle (11), die wenigstens mit dem Verdichter und der ersten Turbine drehfest verbunden ist,
eine zweite Drehwelle (13), mit der die zweite Turbine drehfest verbunden ist, wobei diese zweite Drehwelle jedoch gegenüber der ersten Drehwelle drehfrei ist,
einen Regler (15) zur Steuerung der Versorgung der Brennkammer mit Treibstoff, welcher dazu ausgelegt ist, die Versorgung zu unterbrechen, wenn eine Drehzahl (N₂) der zweiten Drehwelle einen maximalen Schwellwert (N_{2,max}) überschreitet, der in Abhängigkeit von wenigstens einem physikalischen Richtparameter variiert, der einer mechanischen Leistung, welche durch die zweite Turbine (12) aus Verbrennungsgasen entnommen wird, zugeordnet ist,
**dadurch gekennzeichnet, dass** der maximale Schwellwert der Drehzahl der zweiten Drehwelle reduziert ist, wenn der physikalische Richtparameter einen oberen Schwellwert überschreitet und wenn der physikalische Richtparameter einen unteren Schwellwert unterschreitet.

## Claims

1. A regulation method for regulating at least one turbine engine (5) that comprises at least:
• a compressor (8);
• a combustion chamber (9) downstream from the compressor;
• first and second turbines (10, 12) downstream from the combustion chamber;
• a first rotary shaft (11) constrained to rotate at least with said compressor and said first turbine;
• a second rotary shaft (13) constrained to rotate with the second turbine, the second rotary shaft nevertheless being free to rotate relative to the first rotary shaft; and
• a regulator (15) for controlling the feed of fuel to the combustion chamber;
wherein said regulator cuts off the feed of fuel to the combustion chamber if the speed of rotation (N₂) of said second rotary shaft exceeds a maximum threshold (N_{2,max}) that varies as a function of at least one indicative physical parameter associated with mechanical power being extracted from the combustion gas by the second turbine (12);
the method being **characterized in that** said maximum threshold for the speed of rotation of the second rotary shaft is reduced when said indicative physical parameter exceeds a higher threshold and when said indicative physical parameter passes below a lower threshold.

2. A regulation method according to claim 1, wherein said indicative physical parameter is torque transmitted by the second rotary shaft.

3. A regulation method according to claim 1, wherein said indicative physical parameter is a speed of rotation of the first rotary shaft.

4. A regulation method according to claim 3, wherein said maximum threshold for the speed of rotation of the second rotary shaft varies as a function at least of said speed of rotation of the first rotary shaft, and also as a function of ambient pressure and/or temperature (p₀, T₀).

5. A regulation method according to claim 1, wherein said indicative physical parameter is a pressure downstream from said compressor (8).

6. A regulation method according to claim 1, wherein said indicative physical parameter is a temperature downstream from said combustion chamber (9).

7. A regulation method according to claim 1, wherein said indicative physical parameter is a flow rate of fuel supplied to the combustion chamber (9).

8. A regulation method according to claim 1, wherein said indicative physical parameter is a flow rate of air passing through said compressor (8).

9. A regulation method according to claim 1, wherein said indicative physical parameter is a movement of a control member (25) for controlling the engine (5).

10. A regulation method according to claim 1, wherein, below said higher threshold of said indicative physical parameter, a warning is recorded if the speed of rotation (N₂) of the second rotary shaft exceeds a warning threshold (N_{2,avert}) substantially lower than its maximum threshold.

11. A regulation method according to claim 1, wherein said maximum threshold for the speed of rotation of the second rotary shaft decreases gradually with an increase in said indicative physical parameter between an intermediate threshold and its higher threshold.

12. A data medium including a set of instructions suitable for being executed by a programmable digital regulator in order to perform a regulation method according to any one of claims 1 to 11.

13. A turbine engine (5) comprising at least:
a compressor (8);
a combustion chamber (9) downstream from the compressor;
first and second turbines (10, 12) downstream from the combustion chamber
a first rotary shaft (11) constrained to rotate at least with said compressor and said first turbine;
a second rotary shaft (13) constrained to rotate with the second turbine, the second rotary shaft nevertheless being free to rotate relative to the first rotary shaft; and
a regulator (15) for controlling the feed of fuel to the combustion chamber and configured to cut off said feed if a speed of rotation (N₂) of said second rotary shaft exceeds a maximum threshold (N_{2,max}) that varies as a function of at least one indicative physical parameter associated with mechanical power being extracted from the combustion gas by the second turbine (12);
the engine being **characterized in that** said maximum threshold for the speed of rotation of the second rotary shaft is reduced when said indicative physical parameter exceeds a higher threshold and when said indicative physical parameter passes beneath a lower threshold.
